# FASCICULE DE BREVET EUROPEEN

(11) **EP 2 479 596 B1**
(45) Date de publication et mention de la délivrance du brevet: **01.01.2020**
(21) Numéro de dépôt: 12290021.0
(22) Date de dépôt: 17.01.2012
(51) Int. Cl.: G02B 7/00

(54) **Dispositif de liaison pour positionner, selon un référentiel orthonormé tridimensionnel, deux plans l'un par rapport à l'autre et outillage de réglage pour le dispositif**
Verbindungsvorrichtung zum Positionieren von zwei Ebenen zueinander nach einem dreidimensionalen orthonormalen Bezugssystem und Werkzeug zum Einstellen der Vorrichtung
Device for positioning two planes relative to one another according to a three-dimensional orthonormal frame of reference and tool for adjusting the device

(30) Priorité: 21.01.2011 FR 1100188
(43) Date de publication de la demande: 25.07.2012
(73) Titulaire: MBDA France, 92350 Le Plessis-Robinson (FR)
(72) Inventeur: Tostivint, Frédéric, 18000 Bourges (FR); Tisseron, Bernard, 58180 Marzy (FR); Morand, Pierre, 78114 Magny-les-Hameaux (FR); Labbe, Agnès, 92130 Issy-les-Moulineaux (FR); Boucher, Philippe, 41300 Theillay (FR); Baron, Didier, 18570 La Chapelle Saint Ursin (FR)
(74) Mandataire: Gevers & Orès

(56) Documents cités:
- FR-A1- 2 793 891
- GB-A- 1 315 733
- US-A- 4 655 548
- US-A- 5 194 993
- US-A1- 2005 001 134
- US-B1- 6 296 362

## Description

La présente invention concerne un dispositif de liaison mécanique pour positionner, selon un référentiel orthonormé tridimensionnel, deux plans l'un par rapport à l'autre, à l'aide de mécanismes de liaison agissant en translation et en rotation selon les axes du référentiel, un outillage de réglage du dispositif de liaison mécanique, ainsi qu'un système optoélectronique notamment embarqué, quoique non exclusivement, sur un aéronef tel qu'un avion.

Dans cette application particulière du dispositif de liaison, le système optoélectronique est destiné à détecter un objet volant tel qu'un missile ou analogue voire un autre avion, se dirigeant vers l'avion porteur du système qui est pris pour cible. Et, pour cela, il a pour mission de prendre des images de l'espace aérien environnant de l'avion, lesquelles images sont ensuite analysées en temps réel par des moyens de traitement d'images usuels.

Bien entendu, toute autre application du dispositif de liaison pourrait être envisagée dès l'instant où l'on souhaite avoir deux plans parallèles et rigoureusement centrés et orientés l'un par rapport à l'autre.

Un tel système optoélectronique comporte principalement :
- un dispositif optique susceptible d'observer l'environnement et présentant un plan focal de formation d'image ;
- un détecteur à matrice de détection formant un plan actif et agencé en regard du plan focal du dispositif optique ; et
- un dispositif de liaison mécanique réglable associant ledit dispositif optique audit détecteur matriciel pour positionner le plan actif de la matrice par rapport au plan focal du dispositif optique.

Ainsi, le système permet de réaliser un suivi du plan focal du dispositif optique par rapport à la matrice du détecteur, par exemple, à capteurs infrarouges, lequel suivi du plan focal optique sur le plan actif du détecteur matriciel est nécessaire pour pouvoir disposer d'une image correctement focalisée, c'est-à-dire nette en tout point, susceptible d'être exploitée par des algorithmes usuels de traitement d'images.

Aussi, pour arriver à un résultat optimal, on se rend donc compte de l'importance du positionnement du plan actif du détecteur matriciel par rapport au plan focal de formation d'images issu du dispositif optique, le dispositif de liaison devant assurer un positionnement centré sur l'axe optique du plan focal et orienté parallèlement à ce dernier.

En effet, si la matrice du détecteur n'est pas rigoureusement parallèle au plan focal ni parfaitement centrée sur l'axe optique de celui-ci, elle délivrera, après traitement, une image imparfaite, erronée, ne correspondant pas à celle « visualisée » par le dispositif optique, avec les conséquences que cela peut avoir notamment dans l'application rappelée précédemment.

Le positionnement du détecteur matriciel par rapport au dispositif optique est obtenu, dans les systèmes optoélectroniques actuels, par des mécanismes de liaison réglables, assurant les translations et les rotations nécessaires à l'aide, par exemple, de vis pour les translations, de plateaux diviseurs pour les rotations ou de mécanismes couplés à vis et/ou à plateaux diviseurs pour multiplier les degrés de réglage.

Aussi, pour régler correctement et précisément le détecteur matriciel selon les axes d'un référentiel tridimensionnel et autour de ceux-ci, les trois translations et les trois rotations définissant les six degrés de liberté, il est nécessaire de prévoir pour les différents déplacements, de nombreux appareillages spécifiques distincts les uns des autres avec leurs propres pièces et composants, qui sont coûteux, encombrants notamment les plateaux diviseurs, et par ailleurs lourds.

On connaît par le document US 4 655 548 un montage ou dispositif de liaison mécanique à six degrés de liberté (trois translations et trois rotations) pour un dispositif optique, comportant des pièces imbriquées les unes dans les autres et mobiles par des moyens d'entrainement agissant sur les différents degrés. Ces moyens assurent à la fois le réglage et l'immobilisation des pièces les unes par rapport aux autres, ce qui interdit une grande précision de réglage.

Les documents US 5,194,993, GB 1 315 733 et US 2005/0001134 divulguent des dispositifs de liaison mécanique. La présente invention a pour but de remédier à ces inconvénients en permettant de positionner deux plans l'un par rapport à l'autre à partir d'un dispositif de liaison à pièces imbriquées, garantissant un réglage précis et fiable des deux plans respectifs.

Le procédé qui ne fait pas partie de l'invention pour positionner, selon un référentiel orthonormé tridimensionnel, deux plans l'un par rapport à l'autre, et mettant en œuvre un dispositif de liaison mécanique incorporant dans des pièces imbriquées les unes dans les autres, lesdits plans et des mécanismes de liaisons réglables agencés dans lesdites pièces pour réaliser les translations et les rotations du référentiel, des organes de serrage immobilisant en position lesdites pièces, est remarquable en ce qu'il consiste à utiliser un outillage de réglage, indépendant du dispositif de liaison et pourvu de moyens de réglage agissant individuellement sur les mécanismes, pour dissocier le fonction de réglage des mécanismes de la fonction de serrage des pièces liée au dispositif.

Ainsi, par la dissociation des fonctions de réglage et de serrage, on est sûr que le réglage d'une translation ou d'une rotation n'agit pas sur les autres degrés de liberté, ce qui permet d'obtenir dans le cas présent deux plans rigoureusement parallèles, centrés et orientés parfaitement.

L'invention concerne le dispositif de liaison selon la revendication 1.

Ainsi, par l'agencement imbriqué du type en gigogne des pièces avec les mécanismes de liaison successivement prévus sur celles-ci, on réduit fortement l'encombrement du dispositif, de sorte que la compacité de celui-ci s'en trouve améliorée, contrairement aux dispositifs usuels avec des appareillages individuels et distincts pour chaque translation et rotation. Un tel empilage de pièces successives entre les plans à régler, permet de décomposer les six degrés de liberté, c'est-à-dire les trois translations et les trois rotations, de sorte que l'on peut effectuer un réglage sans agir sur ni dérégler les autres. En conséquence, par les mécanismes de liaison des pièces imbriquées agissant selon les trois translations des axes du référentiel tridimensionnel et les trois rotations autour de ceux-ci, soit les six degrés de liberté, les deux plans sont parfaitement positionnés (parallélisme, centrage et orientation) de façon fiable et précise.

Dans un mode de réalisation, les pièces imbriquées sont au nombre de quatre, deux pièces d'extrémité avec les plans respectifs associés et, entre celles-ci, deux pièces intermédiaires, lesdits mécanismes de liaison étant prévus entre les quatre pièces imbriquées successivement pour assurer les translations et les rotations.

Selon l'invention, par rapport au référentiel, où l'axe x est perpendiculaire aux axes yz des plans, lesdites pièces imbriquées comprennent :
- une plaque de support portant l'un des plans et montée autour de l'axe x, pour définir le mécanisme de liaison en rotation autour de l'axe x ;
- une platine rapportée contre la plaque, pour définir le mécanisme de liaison en translation suivant l'axe y ;
- une pièce en équerre montée autour de l'axe x et rapportée sur la platine pour définir les mécanismes de liaison en rotation et en translation respectivement autour et suivant l'axe z ; et
- une poutre portant l'équerre et à laquelle est fixé l'autre plan pour définir les mécanismes de liaison en translation suivant l'axe x et en rotation autour de l'axe y, la plaque de support et la poutre constituant les pièces d'extrémité et la platine et l'équerre constituant les pièces intermédiaires.

Dans un mode préféré de réalisation, le mécanisme de liaison en rotation autour de l'axe x comporte des lumières arquées oblongues ayant pour centre l'axe x et ménagées dans un épaulement radial du détecteur s'appliquant contre ladite plaque pourvue de trous circulaires en regard desdites lumières arquées, oblongues.

Le mécanisme de liaison en translation suivant l'axe y est à glissière et comporte une languette selon l'axe y, ménagée dans l'une de la plaque ou de la platine et avec laquelle coopère une rainure correspondante ménagée dans l'autre de la platine ou de la plaque.

Les mécanismes de liaison en rotation et en translation par rapport à l'axe z sont à glissière et comportent des parties à surfaces cylindriques coopérantes prévues respectivement sur la platine et la pièce en équerre.

Les mécanismes de liaison en translation selon l'axe x et en rotation selon l'axe y sont respectivement à glissière, un pion à méplats lié à l'équerre coulissant dans un trou oblong de la poutre selon l'axe x, et à articulation cylindrique, un axe formant pivot selon l'axe y reliant l'équerre à ladite poutre par un orifice.

Par ailleurs, lesdits mécanismes de liaison réglables des pièces imbriquées sont immobilisés en position par des organes de serrage. Et, de préférence, des moyens de rattrapage de jeu sont prévus entre lesdites pièces et leurs mécanismes de liaison, garantissant un réglage précis des plans.

L'invention concerne également le système optoélectronique selon la revendication 9.

Avantageusement les deux plans correspondant au plan focal et au plan actif du dispositif optique et du détecteur, respectivement.

Dans l'application préférentielle, compte tenu de l'espace confiné prévu dans les zones attribuées à ces systèmes, la compacité d'un tel dispositif de liaison à pièces imbriquées est particulièrement appréciable et permet, de plus, une intégration au plus près du dispositif optique et du détecteur matriciel. Ainsi, par les mécanismes de liaison des pièces imbriquées permettant les trois translations et les trois rotations, soit les six degrés de liberté, le plan de la matrice est parfaitement positionné de façon fiable et précise par rapport au plan focal du dispositif optique.

L'invention concerne également l'outillage selon la revendication 10 et permettant de régler les mécanismes de liaison du dispositif de liaison mécanique, indépendamment du serrage de ceux-ci, selon les trois translations et les trois rotations d'un référentiel orthonormé tridimensionnel, et d'absorber les jeux fonctionnels lors des réglages successifs par suite du desserrage des organes de serrage.

Dans un exemple de réalisation, l'outillage comprend un support rigide sur lequel est fixée la pièce d'extrémité du dispositif de liaison portant l'un des plans (par exemple le plan fixe du dispositif optique), et des moyens de réglage pour agir individuellement sur les mécanismes de liaison du dispositif pour déplacer lesdites autres pièces imbriquées selon les translations et les rotations et régler la position de l'autre plan (le plan actif du détecteur matriciel mobile par rapport au plan focal du dispositif optique fixe).

En particulier, lesdits moyens de réglage des mécanismes sont définis à partir de vis pouvant être micrométriques si nécessaire garantissant un réglage précis des plans. On souligne ici que, dans l'application préférentielle, les plages de réglage en translation sont de l'ordre de 1 à 2 millimètres et celles en rotation sont inférieures à 1-2 degrés, et les précisions des réglages de l'ordre du micromètre et du milliradian.

Les figures du dessin annexé feront bien comprendre comment l'invention peut être réalisée. Sur ces figures, des références identiques désignent des éléments semblables.
La figure 1 est un schéma synoptique d'un système optoélectronique incorporant le dispositif de liaison mécanique conforme à l'invention.
La figure 2 est une vue en perspective du système optoélectronique montrant le dispositif de liaison mécanique réglable associant le dispositif optique au détecteur matriciel.
La figure 3 est une coupe axiale dudit système représenté sur la figure 2, montrant ledit dispositif de liaison.
La figure 4 montre en perspective le mécanisme du dispositif de liaison mécanique assurant la rotation du détecteur matriciel selon l'axe x d'un référentiel orthonormé tridimensionnel.
La figure 5 montre en perspective le mécanisme du dispositif de liaison assurant la translation du détecteur matriciel selon l'axe y du référentiel.
La figure 6 montre en perspective les mécanismes du dispositif de liaison assurant respectivement la translation et la rotation du détecteur matriciel selon l'axe z du référentiel.
La figure 7 montre en perspective les mécanismes du dispositif de liaison assurant la translation et la rotation du détecteur matriciel selon l'axe x et l'axe y du référentiel, respectivement.
La figure 8 représente, en perspective, un outillage portant les moyens de réglage des mécanismes de liaison du détecteur matriciel par rapport au dispositif optique du système.
Les figures 9 et 10 sont des perspectives éclatées des moyens de réglage seuls de l'outillage.
La figure 11 montre, en perspective partielle, les moyens de réglage en translation du dispositif optique selon l'axe x.
La figure 12 montre, en perspective partielle, les moyens de réglage en translation du dispositif optique selon l'axe y.
La figure 13 montre, en perspective partielle, les moyens de réglage en translation du dispositif optique selon l'axe z.
La figure 14 montre, en perspective partielle, les moyens de réglage en rotation du dispositif optique selon l'axe x.
La figure 15 montre, en perspective partielle, les moyens de réglage en rotation du dispositif optique selon l'axe y.
La figure 16 montre, en perspective partielle, les moyens de réglage en rotation du dispositif optique selon l'axe z.

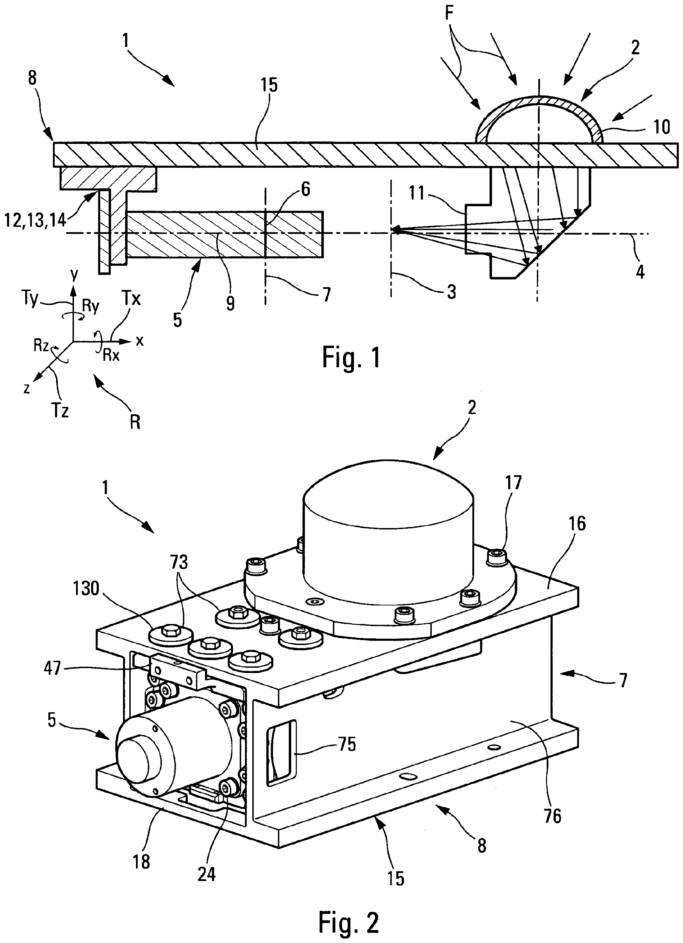

Le système optoélectronique 1 représenté schématiquement sur la figure 1 comprend de façon générale :
- un dispositif optique 2 usuel, qui est susceptible d'observer l'environnement autour du système 1, comme illustré par des flèches F, et qui présente un plan focal 3, plan de formation de l'image, perpendiculaire à l'axe optique de sortie 4 du dispositif,
- un détecteur 5 usuel, par exemple infrarouge, qui coopère avec le dispositif optique 2 et qui comprend une matrice de détection 6 définissant le plan actif 7 du détecteur et qui doit présenter un centrage et une orientation stable, parallèle, par rapport au plan focal 3, pour pouvoir former une image électronique (nette et exploitable) de l'environnement observé par le dispositif optique 2 ; et
- un dispositif 8 pour lier ensemble, mécaniquement et de façon réglable, ledit dispositif optique 2 et ledit détecteur 5.

Ce dispositif de liaison 8 conforme à l'invention, permet de façon générale, de positionner deux plans l'un par rapport à l'autre, et n'est donc pas limité à un tel système 1.

Dans l'application préférentielle quoique non exclusive de l'invention, le système optoélectronique 1 est destiné à être embarqué à bord d'un avion pour détecter un objet volant, tel qu'un missile, en prenant pour cela des images de l'environnement qui sont ensuite analysées par des moyens usuels de traitement d'images, non représentés. Bien entendu, le système pourrait être monté sur un autre « engin » mobile tel qu'un navire, un char, etc..., voire sur une structure fixe.

On comprend donc que le dispositif de liaison mécanique 8 a un rôle essentiel dans le système 1 puisqu'il doit assurer, non seulement la fixation du dispositif optique 2 et du détecteur 5, mais également leur positionnement l'un par rapport à l'autre pour que leurs plans respectivement focal 3 et matriciel actif 7 (figure 1) soient rigoureusement parallèles, avec l'axe géométrique 9 du détecteur matriciel de forme cylindrique selon l'axe optique 4 du dispositif 2. Cela pour délivrer des images traitées fiables et exploitables, correspondant à l'environnement observé par le dispositif optique 2 à travers un dôme 10.

Ce dispositif de liaison mécanique 8 (figures 1, 2, 3) comprend un ensemble de pièces 12 à 15 imbriquées les unes dans les autres, permettant d'effectuer, par des mécanismes de liaison indépendants M1 à M6 issus des pièces imbriquées, des déplacements en translation Tx, Ty, Tz et en rotation Rx, Ry, Rz selon les six degrés de liberté possibles, par l'intermédiaire de moyens de réglage R1 à R6, dans cette réalisation, du détecteur matriciel mobile 5 par rapport au dispositif optique fixe 2 du système, selon un référentiel ou repère orthonormé tridimensionnel R. Bien entendu, on pourrait envisager un détecteur fixe et un dispositif optique mobile, voire le détecteur et le dispositif optique tous deux mobiles.

Le repère R est indiqué, avec les six déplacements ci-dessus, en regard de la figure 1, l'axe x étant, dans l'exemple illustré, horizontal dirigé selon l'axe du détecteur matriciel cylindrique, l'axe y vertical, et l'axe z perpendiculaire au plan formé par les axes x et y, les plans étant à positionner dans yz.

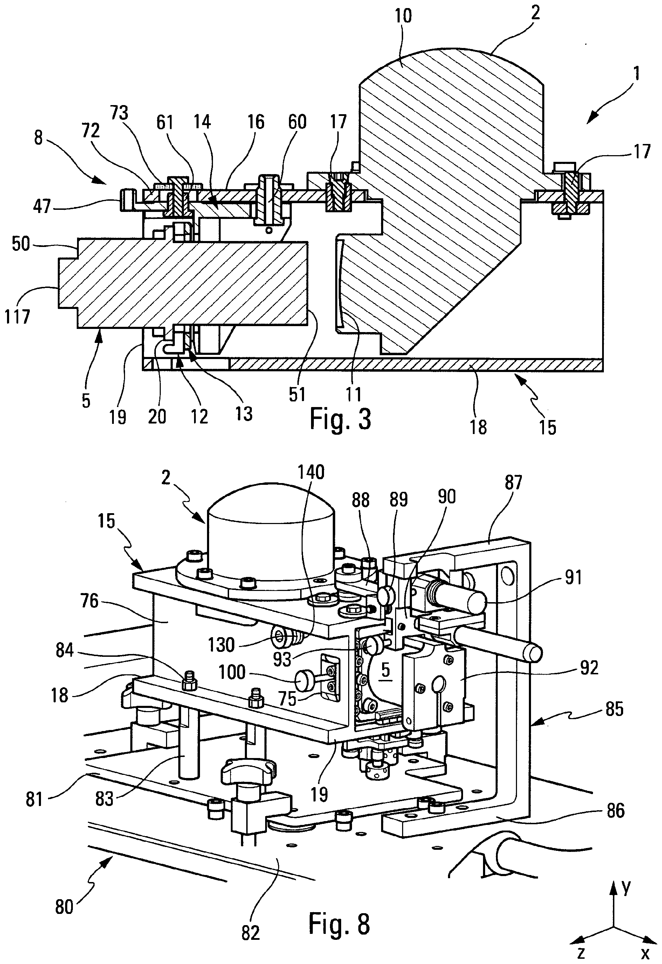

Comme le montrent les figures 2 et 3, les pièces imbriquées du dispositif de liaison 8 comprennent, en partant du détecteur matriciel 5 jusqu'au dispositif optique 2, une plaque de support 12, une platine 13, une pièce en équerre 14 et une poutre 15 dont la section transversale est rectangulaire, creuse, et sur la paroi supérieure 16 de laquelle est monté le dispositif optique 2 par des éléments de fixation 17 (vis et autres..). La plaque 12 et la poutre 15 constituent donc les pièces d'extrémité ou externes du dispositif, auxquelles sont associés les plans à positionner, et la platine 13 et l'équerre 14, les pièces intermédiaires ou internes. Le dôme 10 est tourné vers l'extérieur et l'élément optique de sortie tel qu'une lentille 11 du dispositif optique 2 est à l'intérieur de la poutre 15 avec l'axe optique 4 selon celle-ci. Le détecteur 5 et les pièces 12, 13, 14 se trouvent également dans la poutre.

Sur la figure 1, par souci de clarté, la poutre 15 est représentée de façon simplifiée, il en va de même pour les pièces 12 à 14 qui sont réunies en une seule.

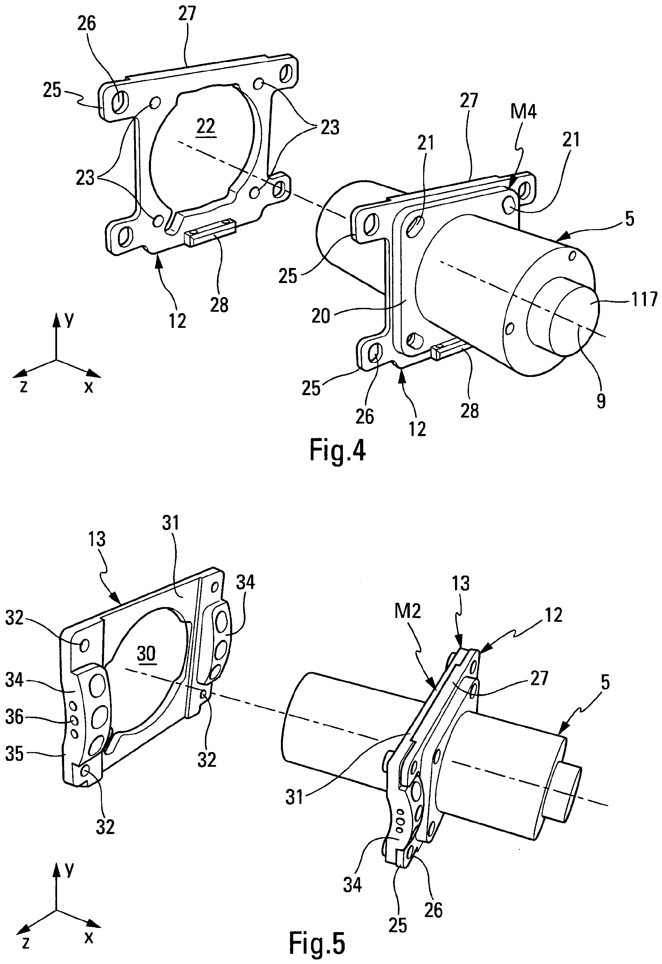

Le mécanisme de liaison M4 pour effectuer la rotation Rx du détecteur matriciel 5 de forme cylindrique par rapport à l'axe x du repère, c'est-à-dire autour de son axe géométrique 9, est illustré en regard de la figure 4. Pour cela, le détecteur matriciel 5 présente, en périphérie et sensiblement en son milieu, un épaulement externe transversal 20 de forme carrée, aux coins duquel sont ménagées des lumières oblongues, arquées et identiques 21 ayant pour centre commun l'axe géométrique 9.

Autour du détecteur est montée la plaque de support 12 par un passage traversant 22 prévu à cet effet et servant de centrage et de guidage, de manière à venir au contact de l'épaulement externe 20 du détecteur. On voit, sur la figure 4, que la plaque de support est aussi de forme carrée et légèrement supérieure à l'épaulement et qu'elle est munie de trous taraudés 23 venant en correspondance des lumières arquées 21. Des organes de serrage 24, tels que des vis, visibles sur les figures 2, 8 et 14, assurent la fixation de la plaque 12 au détecteur 5 en s'engageant, depuis l'épaulement 20, dans les lumières arquées 21 puis en se vissant dans les trous 23 de la plaque. Ce mécanisme de liaison M4 par lumières arquées et trous détermine la plage de rotation Rx du détecteur par l'intermédiaire des moyens de réglage R4 qui seront décrits ultérieurement.

On remarque, également sur la figure 4, que la plaque de support 12 se prolonge au niveau de ses coins par des pattes en saillie 25 s'étendant dans la direction de l'axe z du repère et débordant de la périphérie de l'épaulement transversal 20 une fois la plaque montée sur le détecteur. Dans chaque patte 25 est prévu un trou oblong 26 selon la direction de l'axe y. En outre, du coté opposé à l'épaulement transversal, est ménagée une languette 27 faisant saillie de la face de la plaque, et disposée selon l'axe y. Et, en partie basse de la plaque de support 12, fait également saillie de sa face en contact avec l'épaulement 20, sous ce dernier, un rebord allongé 28 selon la direction de l'axe z.

Le mécanisme de liaison M2 pour effectuer la translation Ty du détecteur selon l'axe y du repère, est illustré en regard de la figure 5. Pour cela, la platine 13 est destinée à être rapportée autour du détecteur cylindrique 5 pour venir au contact de la plaque de support 12.

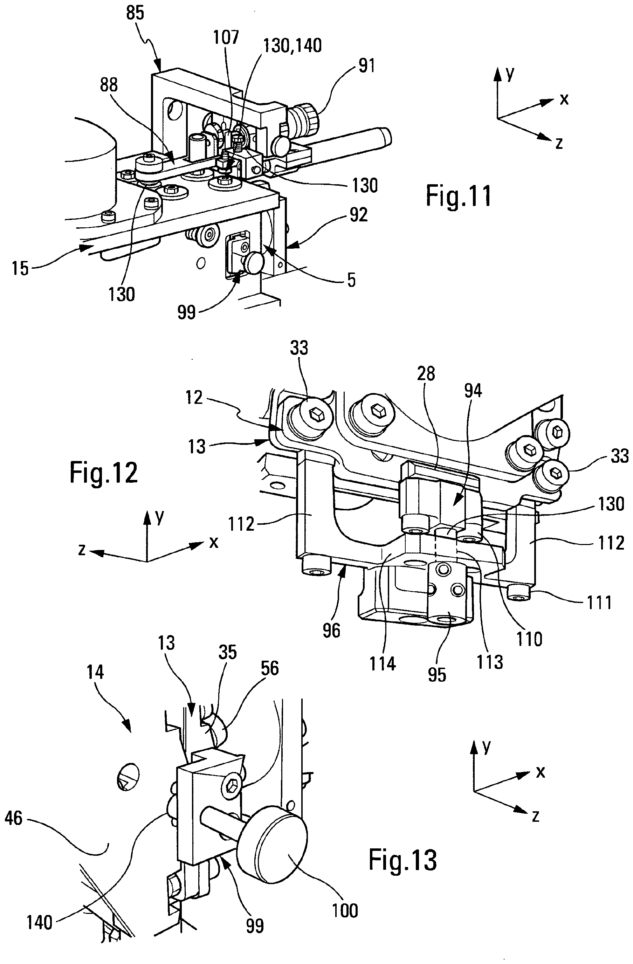

En particulier, la platine 13 a une forme carrée dimensionnellement semblable à la plaque 12 et présente un passage traversant 30 correspondant à celui de ladite plaque. Dans la face de la platine 13 tournée vers la plaque 12, est ménagée une rainure 31 selon l'axe y, qui coopère avec la languette 27 de la plaque pour définir ainsi le mécanisme de liaison M2 par glissière permettant le déplacement relatif en translation Ty de la platine 13 par rapport à la plaque 12 et au détecteur 5 assemblés, selon l'axe y. Au voisinage des coins de la platine carrée 13 sont prévus des trous 32 aptes à venir en correspondance des trous oblongs 26 de la plaque de support 12, ce qui détermine la plage de réglage autorisée selon la translation Ty. Des organes de serrage 33 (figure 12), tels que des vis, traversent les trous en correspondance et assurent la fixation de la platine 13 sur la plaque 12.

Par ailleurs, on voit sur la figure 5 que, respectivement de part et d'autre de la rainure 31, sont prévues des parties latérales cylindriques, bombées 34 qui s'engagent, avec jeu, dans les espaces libres laissés entre les deux pattes 25 d'un même coté de la plaque de support 12. Et dans les bords latéraux 35 des parties bombées, sont prévus des trous 36 aptes à recevoir des moyens de réglage R3 selon l'axe z, comme on le verra ultérieurement.

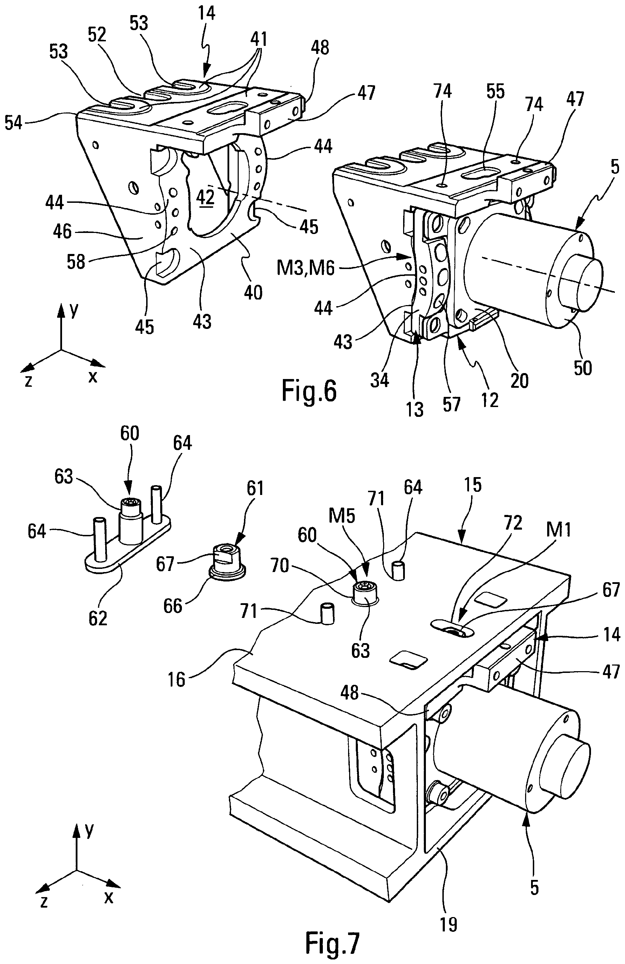

Les mécanismes de liaison M3 et M6 pour effectuer la translation Tz et la rotation Rz, respectivement, sont illustrés notamment en regard de la figure 6. Pour cela, la pièce en équerre 14 est utilisée en combinaison avec la platine 13 et comporte deux parois principales perpendiculaires, l'une verticale 40 dans le plan yz et l'autre horizontale 41 dans le plan xz.

Dans la paroi verticale 40 est ménagé un passage traversant 42 pour le montage de l'équerre 14 autour du détecteur cylindrique 5 et la face 43 de cette paroi présente, de part et d'autre du passage, deux parties latérales cylindriques bombées 44, qui sont dans ce cas convexes autour de l'axe z, et parallèles. Ces parties cylindriques convexes 44 ont une courbure identique qui correspond à la courbure des parties cylindriques bombées alors concaves 34 de la platine 13, de manière à coopérer entre elles et définir les mécanismes M3 et M6. Aux angles de la face avant 43 de l'équerre sont prévus des lamages 45 qui sont situés de part et d'autre des parties convexes 44 et qui débouchent dans les faces latérales 46.

Dans la paroi horizontale 41 sont prévus un rebord coudé, un trou oblong et trois demi-trous oblongs. En particulier, le rebord coudé 47 est issu du bord latéral 48 de la paroi 41, tourné vers la face transversale arrière 50 du détecteurs, opposée à sa face transversale avant 51 en regard de l'élément de sortie 11 du dispositif optique 2. Et ce rebord 47 a une forme allongé selon z et est situé en partie centrale du bord latéral et coudé à 90° vers le haut, comme le montrent les figures 3 et 6. Les trois demi-trous oblongs 52, 53 sont rectilignes selon x et débouchent dans le bord latéral opposé 54. L'un 52 se trouve en partie centrale et les deux autres, identiques 53 sont respectivement situés de part et d'autre du demi-trou oblong central 52. Quant au trou oblong 55, proche du rebord coudé 47, il est légèrement courbe, en forme de haricot, avec pour centre l'axe géométrique du demi-trou oblong central 52.

Après le montage de l'équerre 14 sur le détecteur 5, les surfaces cylindriques des parties concaves 34 et convexes 44 formant M3 et M6 sont au contact les unes des autres. On comprend donc que la rotation Rz, autour de l'axe z, est rendue possible entre l'équerre 14 et l'ensemble constitué de la platine 13, de la plaque 12 et du détecteur 5, comme on le verra ultérieurement. En plus de cette rotation Rz s'ajoute la possibilité du déplacement en translation Tz, les surfaces cylindriques coopérantes des parties convexes-concaves faisant aussi office de liaison en translation par glissière de type rainure-languette.

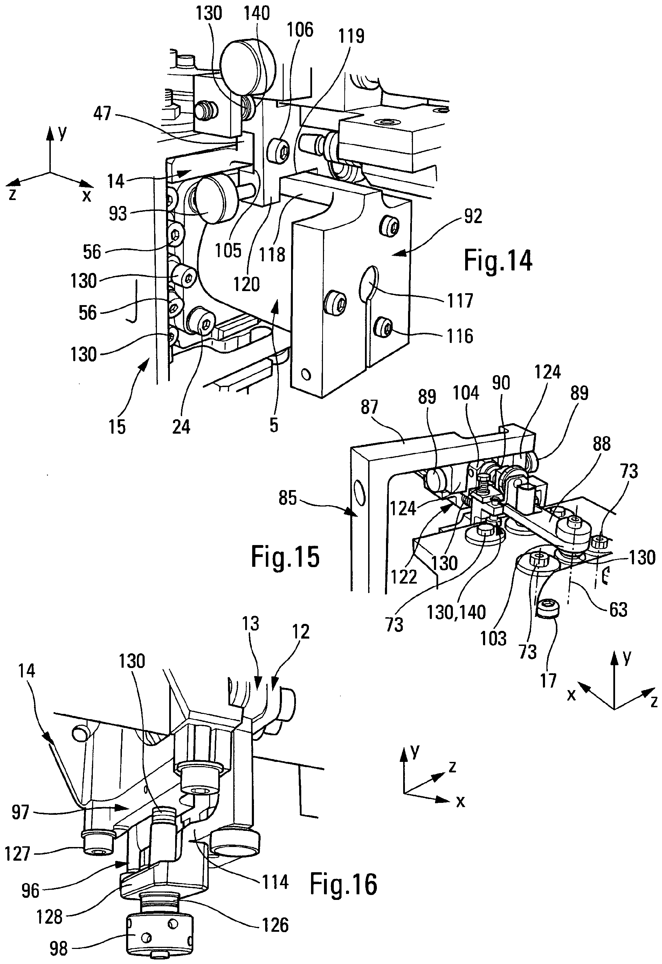

La fixation entre l'équerre et l'ensemble défini ci-dessus s'effectue par des organes de serrage, tels que les vis 56 représentées sur la figure 14, traversant des trous oblongs 57 prévus dans les parties concaves 34 de la platine 13 et s'engageant dans des trous de réception 58 prévus dans les parties convexes 44 de la paroi verticale 40 de l'équerre. Les trous oblongs 57 permettent de créer des jeux suffisants pour effectuer les déplacements Rz et Tz nécessaires entre l'équerre et l'ensemble, lesquels déplacements se trouvent, pour rappel, dans des plages relativement réduites de l'ordre de un à deux millimètres en translation et de un à deux degrés en rotation.

Les mécanismes de liaison M1 et M5 pour effectuer la translation Tx et la rotation Ry, respectivement, sont illustrés sur la figure 7. Pour cela, deux autres pièces intermédiaires 60, 61 entre l'équerre et la poutre sont prévues pour être associées, pour l'une 60, avec les trois demi-trous oblongs 52, 53 et, pour l'autre 61, avec le trou oblong 55.

En particulier, la première pièce intermédiaire 60 présente une base plane allongée 62 de laquelle se dresse perpendiculairement, selon l'axe y, un axe central formant pivot 63 dont le diamètre correspond à celui du demi-trou oblong central 52. Et, de la base 62 sont également issus selon l'axe y, respectivement de part et d'autre de l'axe pivot 63, deux axes cylindriques identiques 64 mais de diamètre inférieur, s'engageant alors avec jeu dans les deux autres demi-trous oblongs 53 correspondant de l'équerre 14. L'axe pivot 63 est destiné à permettre la rotation Ry, tandis que les axes cylindriques 64 permettent le glissement de l'équerre selon Tx.

Quant à la seconde pièce intermédiaire 61, elle se présente elle aussi sous la forme d'un pion cylindrique selon l'axe y, dont une extrémité à une base élargie 66 et dont l'autre extrémité se termine par des méplats opposés parallèlement 67, perpendiculaires à l'axe z du repère. Sa fonction est d'assurer la liaison selon Tx.

Pour permettre cela, comme le montre la figure 7, l'équerre 14, avec l'ensemble défini ci-dessus, sont introduits dans la poutre creuse 15 qui présente, dans sa paroi supérieure plane 16, d'une part, des orifices circulaires 70, 71 venant en regard des demi-trous oblongs 52, 53 de manière à recevoir en correspondance, pour les trous 71, les axes cylindriques 64 et, pour le trou 70, l'axe pivot 63 de la première pièce intermédiaire 60, et d'autre part, un orifice oblong 72 selon l'axe x, dans lequel est reçue l'extrémité à méplats 67 du pion cylindrique formant la seconde pièce intermédiaire 61.

On remarque par ailleurs, sur la figure 7, que la face transversale d'extrémité 19 de la poutre 15 et le bord latéral 48 de l'équerre 14 sont sensiblement proches l'un de l'autre avec le rebord coudé 47 faisant saillie de la face transversale de la poutre. Une partie arrière du détecteur 5 dépasse également de cette face 19 de la poutre 15.

Comme le montrent notamment les figures 2, 3 et 6-8, l'équerre 14 est fixée à l'intérieur de la poutre creuse 15 par des organes de serrage appropriées 73. La paroi 41 (plan xz) de l'équerre portant, par les pièces 12, 13 de l'ensemble précité, le détecteur matriciel 5, est rapportée contre la paroi supérieure 16 de la poutre, sous celle-ci. Et les organes de serrage 73 sont, pour certains, associés avec les axes cylindriques latéraux 64 de la pièce intermédiaire 60 et avec le pion cylindrique à méplats de l'autre pièce intermédiaire 61 et, pour d'autres, traversent des trous en correspondance 74 (figure 6) prévus sur les deux parois concernées. Ces organes de serrage sont, par exemple, du type par vissage.

Après avoir assemblé les différentes pièces imbriquées du dispositif de liaison 8 pour définir les mécanismes de liaison M1 à M6 selon les trois translations et les trois rotations, et associé ainsi le détecteur matriciel 5 au dispositif optique 2 pour former alors un système optoélectronique compact 1, il est nécessaire de procéder aux réglages finaux de celui-ci concernant tout particulièrement les deux plans respectivement focal 3 du dispositif optique 2 et actif 7 du détecteur 5 à matrice 6 pour les raisons évoquées préalablement. Et cela, avant le montage du système optoélectronique 1 à bord de l'avion ou lors d'une opération de maintenance dudit système.

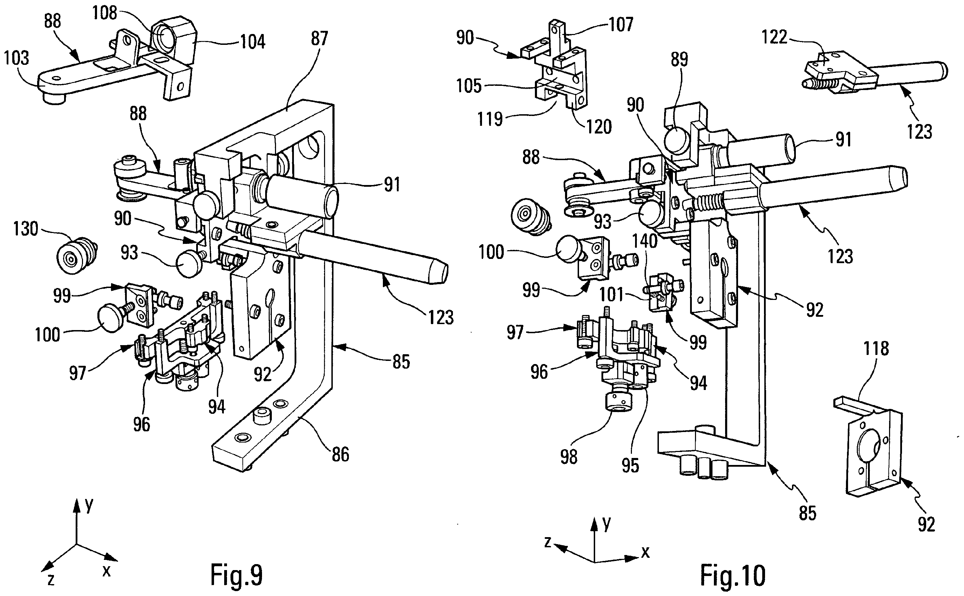

Pour cela, on met en oeuvre le procédé de positionnement de l'invention et comme le montrent les figures 8, 9 et 10, les moyens de réglage R1-R6 des mécanismes de liaison M1-M6 selon les translations Tx, Ty et Tz et les rotations Rx, Ry et Rz, sont associés à un outillage commun 80 permettant d'agir selon les translations et les rotations et de dissocier le fonction de réglage des mécanismes de la fonction de serrage des pièces pour réaliser un positionnement optimal des deux plans.

Cet outillage 80 comporte une embase rigide 81 qui est fixée à une table de support rigide 82 et de laquelle se dressent verticalement des tiges ou colonnettes 83 au bout desquelles est solidarisée, par des écrous 84, la paroi inférieure 18 de la poutre creuse 15. La poutre du dispositif de liaison étant ainsi immobilisée en position avec le dispositif optique 2 fixé à celle-ci par les vis 17, les moyens de réglage R1-R6 de l'outillage 80 sont installés pour procéder aux déplacements (translations et rotations sur les plages définies précédemment) souhaités et « caler » parfaitement le plan actif matriciel 7 sur le plan optique 3. Pour cela, le réglage selon Tx assure la focalisation, les réglages selon Ty et Tz le centrage, et les réglages selon Rx, l'orientation, et selon Ry et Rz, le parallélisme, et donc la netteté du plan matriciel par rapport au plan focal.

L'outillage de réglage 80 comprend, de plus, un support 85 en forme d'étrier en C prévu dans le plan yz du repère devant la face transversale 19 de la poutre. L'étrier 85 est fixé, par l'un 86 de ses bras, à la table horizontale 82 (plan xz) et porte, par son autre bras parallèle 87, certains des composants des moyens de réglage du dispositif 8, par exemple :
- une bride de support 88 agencée selon l'axe x et reliant l'axe de pivot 63 à l'étrier 85, et les vis associées 89, au moins à pas fin, pour le réglage de la rotation Ry ;
- une butée de poussée 90 selon l'axe x avec la vis micrométrique associée 91 du type micrométrique du fait qu'elle agit directement, sans bras de levier, sur le plan focal, pour le réglage de la translation Tx ; et
- un support de réglage 92 autour de l'axe x, reliant la butée de poussée 90 au détecteur 5, et les vis associées 93, à pas fin, pour le réglage de la rotation Rx.

Et, extérieurement à l'étrier 85, l'outillage 80 comprend d'autres composants des moyens de réglage du dispositif 8, notamment :
- un support de traction 94 pour le réglage de la translation Ty par vis à pas fin 95 ;
- un composant 96 en U avec un support de réglage associé 97, disposés entre la platine 13 et l'équerre 14, et avec une vis à pas fin 98 pour le réglage de la rotation Rz ; et
- deux éléments coudés 99 prévus entre la platine et l'équerre et des vis à pas fin associées 100 pour le réglage de la translation Tz.

Comme les mécanismes de liaison sont indépendants les uns des autres tout en étant agencés sur les différentes pièces emboîtées en permettant de décomposer les six degrés de liberté, on peut procéder aux différents réglages de ceux-ci sans ordre précis, selon les circonstances du moment, et l'ordre des réglages qui est donné ci-après, doit être bien entendu considéré en tant qu'exemple particulier et pourrait être modifié.

Pour procéder au réglage en translation Tz du système 1 selon l'axe z, c'est-à-dire selon le mécanisme de liaison M3 à glissière par les parties à surfaces cylindriques concaves et convexes 34, 44 de la platine 13 par rapport à l'équerre 14, les moyens de réglage R3 de l'outillage 80 sont définis par les deux éléments coudés 99 à vis respectives 100.

Comme le montrent les figures 6, 8, 9, 10 et 13, les éléments coudés 99 sont montés respectivement à travers des ouvertures correspondantes 75 ménagées dans les parois latérales 76 de la poutre 15, en regard du mécanisme de liaison M3 à surfaces cylindriques. Chaque élément coudé 99 comporte, d'un coté, un pion cylindrique 101 qui s'engage jusqu'en butée dans le trou correspondant 36 du bord latéral 35 de la platine 13, tandis que de l'autre coté, se trouve la vis de réglage 100 parallèle à l'axe z et s'appliquant contre le bord (ou face) latéral correspondant 46 de l'équerre 14. Les vis 100 portant les éléments 99 sont ainsi accessibles extérieurement, à travers les ouvertures 75.

On comprend donc que, après avoir desserré les vis de serrage unissant la platine 13 à l'équerre 14, puis par l'action sur les vis micrométriques 100 selon le sens de déplacement choisi, la platine 13 à laquelle est fixé le détecteur via la plaque 12, est poussée par les éléments coudés 99 et se déplace relativement par rapport à l'équerre fixe 14 selon l'axe z, grâce au mécanisme M3, de sorte à amener le plan actif du détecteur dans la position correcte en Tz.

Pour procéder au réglage en translation Tx du système selon l'axe x, c'est-à-dire selon le mécanisme de liaison M1 constitué par la seconde pièce intermédiaire 61 à méplats 67 et l'orifice oblong 72 de la poutre, les moyens de réglage R1 sont définis par la bride de support 88, la butée de poussée 90 et la vis micrométrique associée 91 selon l'axe x.

Comme le montrent les figures 7-11, 14 et 15, la butée de poussée 90 présente une rainure 105 selon l'axe z qui s'engage dans le rebord allongé coudé 47 de l'équerre 14 et elle est fixée à celle-ci par des vis de serrage 106. La butée de poussée 90 selon l'axe x se prolonge verticalement par une languette centrale supérieure 107 qui traverse la bride de support 88 de l'axe pivot et contre laquelle s'applique l'extrémité de la vis micrométrique 91. Celle-ci est vissée dans un trou taraudé 108 de la bride de support 88.

Ainsi, après avoir desserré les organes de serrage correspondant 73 entre la poutre fixe 15 (portant le dispositif optique 2) et l'équerre mobile 14 (donc, le reste du système avec le détecteur 5), puis en agissant sur la vis micrométrique 91 liée à la bride de support 88, on déplace selon l'axe x la butée de poussée 90 fixée à l'équerre 14 et, donc, la pièce 61 à méplats 67, par rapport à l'orifice oblong 72 de la poutre 15 fixe. Par conséquent, on éloigne ou on rapproche le plan actif 7 dudit détecteur matriciel 5, du plan focal 3 dudit dispositif optique 2 en Tx.

Pour procéder au réglage en translation Ty du système selon l'axe y, c'est-à-dire par le mécanisme de liaison M2 à glissière constitué par la languette 27 de la plaque 12 solidaire du détecteur et par la rainure 31 de la platine 13, les moyens de réglage R2 sont définis par le support de traction 94, le composant 96 et la vis associée 95.

Comme le montrent les figures 5, 8, 9, 10 et 12, le support de traction 94 est monté sur la plaque 12 en étant amené par des vis 110 au contact de son rebord 28, sous celui-ci, et le composant 96 en U enjambe le support 94 pour se fixer, par des vis 111 traversant ses bras parallèles 112, contre et sous le bord latéral inférieur correspondant de la platine 13. La tige de la vis 95 traverse un trou lisse 113 ménagé dans la base 114 du composant en U pour coopérer par vissage avec le support de traction 94 et ainsi l'entraîner en translation selon l'axe y.

Ainsi, après avoir desserré les organes de serrage 33 permettant le déplacement en y entre la plaque 12 et la platine 13 par les trous oblongs 26, puis en agissant sur la vis 95 qui avance ou recule le support 94 lié au rebord 28, on assure le déplacement en translation Ty par le coulissement de la plaque mobile 12 par rapport à la platine fixe 13 par la liaison à glissière languette 27- rainure 31. Après réglage, les organes de serrage sont vissés immobilisant le système en translation selon y dans la position réglée souhaitée.

Pour procéder au réglage en rotation Rx du système autour de l'axe x, c'est-à-dire par le mécanisme de liaison M4 par trous oblongs courbes 21 et vis associés prévus entre l'épaulement 20 du détecteur et la plaque 12, les moyens de réglage R4 sont définis par le support de réglage 92, la butée de poussée 90 et les vis associées 93.

Comme le montrent les figures 4, 8, 9, 10 et 14, le support de réglage 92 est fixé en bout de la face transversale 50 du détecteur 5 par des vis 116 en étant monté sur un embout cylindrique 117 qui prolonge cette face du détecteur. Ce support 92 présente latéralement un bras 118 qui suit parallèlement le détecteur selon l'axe x et qui s'agence dans un évidement 119 prévu entre des bords parallèles 120 terminant la butée de poussée 90. Celle-ci est fixée par les vis 106 sur le rebord en saillie 47 de l'équerre 14. Les vis 93 agencées selon l'axe z sont montées dans les bords 120 pour agir sur le bras latéral 118 du support 92.

Après avoir desserré les organes de serrage correspondant 24, figure 14, immobilisant en rotation selon l'axe x le détecteur 5 du reste du système 1 (pièces 12-15 des moyens de liaison 8 et dispositif optique 2), on peut régler la rotation du plan actif du détecteur autour de cet axe x en agissant pour cela sur les vis concernées 93. Celles-ci font pivoter le détecteur 5 autour de l'axe x, dans le sens choisi, par l'intermédiaire du support 92, solidaire du détecteur, et grâce aux trous oblongs courbes 21 du mécanisme M4 autorisant un tel réglage. Lorsque l'orientation en Rx du plan actif du détecteur est obtenue, les vis de serrage 24 sont vissées immobilisant le détecteur matriciel 5 du système dans la position souhaitée en Rx.

Pour procéder au réglage en rotation Ry du système autour de l'axe y, c'est-à-dire par le mécanisme de liaison M5 à axe de pivot 63 de la première pièce intermédiaire 60 prévue entre la pièce en équerre 14 et la poutre 15, les moyens de réglage R5 sont définis par la bride de support 88, le bras supérieur 87 formant butée de rotation de l'étrier de support 85, et les vis associées 89.

Comme le montrent les figures 8, 9, 10 et 15, la bride de support 88 s'étend sensiblement selon l'axe x et est montée, à l'une de ses extrémités, en liaison en rotation sur l'axe pivot 63 et en liaison glissière selon x, comme on l'a vu précédemment, avec la butée de poussée 90. L'autre extrémité de la bride 88 porte, du coté supérieur, la vis micrométrique 91 de réglage en translation selon x et repose, du coté inférieur, sur un palier de support 122 pour un capteur de déplacement sur x 123. Et les vis de réglage 89 sont montées selon l'axe z, en opposition l'une de l'autre, dans des pattes 124 prolongeant perpendiculairement le bras 87 de l'étrier 85 et disposées respectivement de part et d'autre de l'extrémité concernée de la bride de support 88.

Ainsi, après avoir desserré les organes de serrage correspondant 73 immobilisant en rotation selon l'axe y, la poutre 15 avec le dispositif optique 2 et le reste (pièces 14, 13, 12 et détecteur 5) du système, l'action sur les vis 89 selon l'axe z entraîne, dans le sens choisi, le déplacement en rotation en y de la bride de support 88 autour de l'axe pivot 63 de la pièce 60. Ainsi, par rapport à la poutre 15 qui reste immobile, avec le dispositif optique 2 et son plan focal, l'ensemble constitué de la pièce en équerre 14, de la platine 13, de la plaque 12 et du détecteur 5 s'oriente en Ry de manière à positionner correctement le plan actif du détecteur matriciel autour de l'axe y par rapport au plan focal du dispositif optique. Les organes de serrage sont par la suite resserrés.

Pour procéder au réglage en rotation Rz du système autour de l'axe z, c'est-à-dire par le mécanisme de liaison M6 avec les parties à surfaces concaves et convexes de la pièce en équerre 14 et de la platine 13, les moyens de réglage R6 sont définis par le support de réglage en rotation 97, le composant 96 en U et la vis 98 à rondelles sphériques 126.

Comme le montrent les figures 6, 8, 9, 10 et 16, le support de réglage 97 est rapporté sous l'équerre 14 par des vis 127, tandis que la vis 98 avec ses rondelles sphériques 126 est liée à une partie en saillie 128 de la base 114 du composant 96 en U fixé à la platine 13, avec la tige de la vis venant au contact du support de réglage 97 au milieu de celui-ci.

Ainsi, après le desserrage des organes de serrage concernés 56, figure 14, entre l'équerre 14 et la platine 13, puis par l'action de la vis 98 agissant selon l'axe y sur le support de réglage 97, la platine 13 s'oriente, dans un sens ou dans l'autre, autour de l'axe z, par glissement relatif de ses parties 34 à surfaces concaves sur les parties 44 à surfaces convexes de l'équerre 14. Ainsi, le plan actif du détecteur matriciel 5 peut être réglé et orienté de façon appropriée en Rz autour de l'axe z.

Ainsi, les moyens de réglage R1-R6 ainsi décrits assurent indépendamment les uns des autres les déplacements des mécanismes M1-M6 prévus dans les pièces imbriquées et ce dans les plages données, selon les trois translations (permettant le centrage et la focalisation) et les trois rotations (permettant les orientations et le parallélisme) du repère formant les six degrés de liberté du système optronique 1 chaque mécanisme, une fois réglé, étant ensuite immobilisé par le ou les organes de serrage respectifs. De la sorte, le plan actif 7 du détecteur matriciel 5 peut être parfaitement réglé par rapport au plan focal de formation d'image 3 du dispositif optique 2 permettant, après traitement, de créer des images exactes et nettes de l'environnement extérieur balayé.

Il convient également de mentionner que, pour parfaire l'ensemble de ces réglages, des éléments de placage (ressorts, rondelles élastiques, Belleville, ...) par l'intermédiaire de vis sont prévus dans le système entre les différentes pièces du dispositif et les mécanismes de liaison associés. Ces éléments sont indiqués par la même référence 130 sur les figures et ont pour but de rattraper les jeux fonctionnels apparaissant nécessairement lors du réglage selon les translations et les rotations par suite du montage ou du desserrage des vis de serrage. Par ailleurs, des éléments de glissement 140, tels que des patins et/ou revêtements, sont prévus entre certaines des pièces et composants pour favoriser le glissement lors des déplacements de réglage.

## Revendications

1. Dispositif de liaison mécanique pour positionner, selon un référentiel orthonormé tridimensionnel, deux plans l'un par rapport à l'autre, comprenant des pièces (12, 13, 14, 15) imbriquées les unes dans les autres avec les plans à positionner (3, 7) associés aux pièces d'extrémité respectives imbriquées, et des mécanismes de liaison réglables (M1 à M6) agissant en translation et en rotation selon les axes du référentiel, et qui sont regroupés et agencés dans lesdites pièces imbriquées pour agir indépendamment, pour trois d'entre eux (M1, M2, M3), en translation selon les trois axes du référentiel orthonormé tridimensionnel et, pour trois autres d'entre eux (M4, M5, M6), en rotation autour desdits axes du référentiel, de manière à régler successivement chaque translation et/ou rotation et positionner les deux plans l'un par rapport à l'autre,
**caractérisé en ce que**, par rapport au référentiel où un axe x du référentiel est perpendiculaire à des axes yz des plans, lesdites pièces imbriquées comprennent :
- une plaque de support (12) portant l'un des plans et montée autour de l'axe x pour définir le mécanisme de liaison en rotation (M4) autour de l'axe x ;
- une platine (13) rapportée contre la plaque (12), pour définir le mécanisme de liaison en translation (M2) suivant l'axe y ;
- une pièce en équerre (14) montée autour de l'axe x et rapportée sur la platine (13) pour définir les mécanismes de liaison en rotation (M6) et en translation (M3) respectivement autour et suivant l'axe z ; et
- une poutre (15) portant l'équerre (14) et à laquelle est fixé l'autre plan pour définir les mécanismes de liaison en translation (M1) suivant l'axe x et en rotation (M5) autour de l'axe y, ladite plaque de support et ladite poutre constituant les pièces d'extrémité et la platine et l'équerre constituant les pièces intermédiaires.

2. Dispositif selon la revendication 1,
**caractérisé en ce que** le mécanisme de liaison en rotation (M4) autour de l'axe x comporte des lumières arquées oblongues (21) ayant pour centre l'axe x et ménagées dans un épaulement radial (20) du détecteur s'appliquant contre ladite plaque (12) pourvue de trous circulaires en regard desdites lumières arquées, oblongues.

3. Dispositif selon l'une des revendications 1 ou 2,
**caractérisé en ce que** le mécanisme de liaison en translation (M2) suivant l'axe y est à glissière et comporte une languette (27) selon l'axe y, ménagée dans l'une de la plaque (12) ou de la platine (13) et avec laquelle coopère une rainure correspondante (31) ménagée dans l'autre de la platine ou de la plaque.

4. Dispositif selon l'une des revendications 1 à 3,
**caractérisé en ce que** les mécanismes de liaison en rotation (M6) et en translation (M3) par rapport à l'axe z sont à glissière et comportent des parties à surfaces cylindriques coopérantes (34, 44) prévues respectivement sur la platine et la pièce en équerre.

5. Dispositif selon l'une des revendications 1 à 4,
**caractérisé en ce que** les mécanismes de liaison en translation (M1) selon l'axe x et en rotation (M5) selon l'axe y sont respectivement à glissière, un pion (61) à méplats (67) lié à l'équerre (14) coulissant dans un trou oblong (72) de la poutre (15) selon l'axe x, et à articulation cylindrique, un axe (60) formant pivot selon l'axe y reliant l'équerre (14) à ladite poutre (15) par un orifice circulaire (70).

6. Dispositif selon l'une des revendications 1 à 6,
**caractérisé en ce que** lesdits mécanismes de liaison réglables (M1 à M6) des pièces sont immobilisés en position par des organes de serrage.

7. Dispositif selon la revendication 6,
**caractérisé en ce que** des moyens de rattrapage de jeu (130) sont prévus entre lesdites pièces (12 à 15) et leurs mécanismes de liaison (M1 à M6).

8. Dispositif selon l'une des revendications 1 à 7,
**caractérisé en ce que** l'un desdits plans à positionner par l'intermédiaire des pièces imbriquées à mécanismes de liaison réglables, est mobile par rapport à l'autre plan, fixe, ou les deux plans sont mobiles l'un par rapport à l'autre.

9. Système optoélectronique comportant au moins :
- un dispositif optique (2) susceptible d'observer l'environnement et présentant un plan focal (3) de formation d'image ;
- un détecteur (5) à matrice de détection formant un plan actif (7) et agencé en regard du plan focal du dispositif optique ; et
- un dispositif de liaison mécanique réglable (8) associant ledit dispositif optique audit détecteur matriciel pour positionner le plan actif (7) de la matrice par rapport au plan focal (3) du dispositif optique,
**caractérisé en ce que** ledit dispositif de liaison (8) est du type tel que défini selon l'une des revendications précédentes 1 à 10.

10. Outillage de réglage (80) permettant de régler les mécanismes de liaison du dispositif de liaison (8) selon l'une quelconque des revendications 1 à 8, selon les trois translations et les trois rotations d'un référentiel orthonormé tridimensionnel, comportant un support rigide (81, 82) sur lequel peut être fixée l'une des pièce imbriquées d'extrémité (15) portant de façon fixe l'un desdits plans, et des moyens de réglage (R1 à R6) configurés pour agir individuellement sur les mécanismes de liaison (M1 à M6) dudit dispositif de liaison (8) pour déplacer lesdites autres pièces imbriquées (12, 13, 14) selon les translations et les rotations et régler la position de l'autre plan associé à l'autre pièce d'extrémité, par rapport au plan précédent.

11. Outillage selon la revendication précédente, **caractérisé en ce que** lesdits moyens de réglage (R1 à R6) sont définis à partir de vis (89, 91, 93, 95, 98, 100).

## Patentansprüche

1. Mechanische Verbindungsvorrichtung zum Positionieren von zwei Ebenen gemäß einem dreidimensionalen orthonormierten Bezugssystem zueinander, umfassend Stücke (12, 13, 14, 15), die ineinander verschachtelt sind, wobei die zu positionierenden Ebenen (3, 7) mit den jeweiligen verschachtelten Endstücken verknüpft sind und einstellbare Verbindungsmechanismen (M1 bis M6) translatorisch und rotatorisch entlang der Achsen des Bezugssystems wirken, und die in den verschachtelten Stücken gruppiert und angeordnet sind, um unabhängig für drei unter ihnen (M1, M2, M3) translatorisch entlang den drei Achsen des dreidimensionalen orthonormierten Bezugssystems und, für drei andere unter ihnen (M4, M5, M6) rotatorisch um die Achsen des Bezugssystems herum zu wirken, um jede Translation und/oder Rotation aufeinanderfolgend einzustellen und die zwei Ebenen zueinander zu positionieren,
**dadurch gekennzeichnet, dass**, in Bezug auf das Bezugssystem, wo eine Achse x des Bezugssystems senkrecht zu den Achsen yz der Ebenen ist, die verschachtelten Stücke umfassen:
- eine Stützplatte (12), die eine der Ebenen trägt und um die Achse x herum montiert ist, um den Verbindungsmechanismus rotatorisch (M4) um die Achse x herum zu definieren;
- eine Platine (13), die gegen die Platte (12) angebracht ist, um den Verbindungsmechanismus translatorisch (M2) der Achse y folgend zu definieren;
- ein Winkelelementstück (14), das um die Achse x herum montiert und auf der Platine (13) angebracht ist, um die Verbindungsmechanismen rotatorisch (M6) und translatorisch (M3) jeweils um die Achse z herum und dieser folgend zu definieren; und
- einen Balken (15), der das Winkelelement (14) trägt und an dem die andere Ebene befestigt ist, um die Verbindungsmechanismen translatorisch (M1) der Achse x folgend und rotatorisch (M5) um die Achse y herum zu definieren, wobei die Stützplatte und der Balken die Endstücke ausmachen und die Platine und das Winkelelement die Zwischenstücke ausmachen.

2. Vorrichtung nach Anspruch 1,
**dadurch gekennzeichnet, dass** der Verbindungsmechanismus rotatorisch (M4) um die Achse x herum bogenförmige längliche Öffnungen (21) umfasst, die als Mitte die Achse x aufweisen und in einem radialen Vorsprung (20) des Detektors ausgebildet sind, der gegen die Platte (12) anliegt, die mit kreisförmigen Löchern gegenüber den bogenförmigen, länglichen Öffnungen versehen ist.

3. Vorrichtung nach einem der Ansprüche 1 oder 2,
**dadurch gekennzeichnet, dass** der Verbindungsmechanismus translatorisch (M2) der Achse y folgend zum Gleiten ist und eine Lasche (27) entlang der Achse y umfasst, die in einer von der Platte (12) oder von der Platine (13) ausgebildet ist und mit der eine entsprechende Nut (31) kooperiert, die in dem anderen von der Platine oder von der Platte ausgebildet ist.

4. Vorrichtung nach einem der Ansprüche 1 bis 3,
**dadurch gekennzeichnet, dass** die Verbindungsmechanismen rotatorisch (M6) und translatorisch (M3) in Bezug auf die Achse z zum Gleiten sind und Teile mit zylindrischen kooperierenden Oberflächen (34, 44) umfassen, die jeweils auf der Platine und dem Winkelelementstück vorgesehen sind.

5. Vorrichtung nach einem der Ansprüche 1 bis 4,
**dadurch gekennzeichnet, dass** die Verbindungsmechanismen translatorisch (M1) entlang der Achse x und rotatorisch (M5) entlang der Achse y jeweils zum Gleiten sind, ein Stift (61) mit Abflachungen (67), der mit dem Winkelelement (14) verbunden ist, sich in einem länglichen Loch (72) des Balkens (15) entlang der Achse x verschiebt, und eine Achse (60) mit zylindrischem Gelenk, die einen Schwenkpunkt entlang der Achse y bildet, das Winkelelement (14) mit dem Balken (15) durch eine kreisförmige Aussparung (70) verbindet.

6. Vorrichtung nach einem der Ansprüche 1 bis 6,
**dadurch gekennzeichnet, dass** die einstellbaren Verbindungsmechanismen (M1 bis M6) der Stücke durch Spannelemente in einer Position immobilisiert werden.

7. Vorrichtung nach Anspruch 6,
**dadurch gekennzeichnet, dass** Spielausgleichmittel (130) zwischen den Stücken (12 bis 15) und ihren Verbindungsmechanismen (M1 bis M6) vorgesehen sind.

8. Vorrichtung nach einem der Ansprüche 1 bis 7,
**dadurch gekennzeichnet, dass** eine der Ebenen, die mittels der verschachtelten Stücke mit einstellbaren Verbindungsmechanismen zu positionieren sind, in Bezug auf die andere Ebene mobil ist, fest, oder die zwei Ebenen zueinander mobil sind.

9. Optoelektronisches System, mindestens umfassend:
- eine optische Vorrichtung (2), die geeignet ist, die Umgebung zu beobachten und die eine Fokalebene (3) zur Bildbildung aufweist;
- einen Detektor (5) mit Detektionsmatrix, der eine aktive Ebene (7) bildet und gegenüber der Fokalebene der optischen Vorrichtung angeordnet ist; und
- eine einstellbare mechanische Verbindungsvorrichtung (8), die die optische Vorrichtung mit dem Matrixdetektor verknüpft, um die aktive Ebene (7) der Matrix in Bezug auf die Fokalebene (3) der optischen Vorrichtung zu positionieren,
**dadurch gekennzeichnet, dass** die Verbindungsvorrichtung (8) der Art wie nach einem der vorstehenden Ansprüche 1 bis 10 definiert ist.

10. Einstellungswerkzeug (80), das es ermöglicht, die Verbindungsmechanismen der Verbindungsvorrichtung (8) nach einem der Ansprüche 1 bis 8 gemäß den drei Translationen und den drei Rotationen eines dreidimensionalen orthonormierten Bezugssystems einzustellen, umfassend eine starre Stütze (81, 82), auf der das eine der verschachtelten Endstücke (15), auf feste Weise eine der Ebenen tragend, befestigt werden kann, und Einstellungsmittel (R1 bis R6), die konfiguriert sind, um einzeln auf die Verbindungsmechanismen (M1 bis M6) der Verbindungsvorrichtung (8) zu wirken, um die anderen verschachtelten Stücke (12, 13, 14) gemäß den Translationen und den Rotationen zu bewegen und die Position der anderen Ebene, die mit dem anderen Endstück verknüpft ist, in Bezug auf die vorhergehende Ebene einzustellen.

11. Werkzeug nach dem vorstehenden Anspruch, **dadurch gekennzeichnet, dass** die Einstellungsmittel (R1 bis R6) ausgehend von Schrauben (89, 91, 93, 95, 98, 100) definiert sind.

## Claims

1. Mechanical connection device for positioning, according to a three-dimensional orthonormal frame of reference, two planes with respect to one another, comprising parts (12, 13, 14, 15) nested one in the other with the planes to be positioned (3, 7) associated with nested respective end parts, and adjustable connection mechanisms (M1 to M6) acting in translation and in rotation about the axes of the frame of reference, and which are grouped together and arranged in said nested parts in order to act independently, for three among them (M1, M2, M3), in translation about the three axes of the three-dimensional orthonormal frame of reference and, for three others among them (M4, M5, M6), in rotation about said axes of the frame of reference, so as to successively adjust each translation and/or rotation and position the two planes with respect to one another,
**characterised in that**, with respect to the frame of reference where an axis x of the frame of reference is perpendicular to axes yz of the planes, said nested parts comprising:
- a support sheet (12) bearing one of the planes and mounted about the axis x in order to define the connection mechanism in rotation (M4) about the axis x;
- a plate (13) added against the sheet (12), to define the connection mechanism in translation (M2) about the axis y;
- a bracket part (14) mounted about the axis x and added onto the plate (13) to define the connection mechanisms in rotation (M6) and in translation (M3) respectively about and according to the axis z; and
- a beam (15) bearing the bracket (14) and to which is fastened the other plane to define the connection mechanisms in translation (M1) about the axis x and in rotation (M5) about the axis y, said support sheet and said beam forming the end parts and the plate and the bracket forming intermediate parts.

2. Device according to claim 1, **characterised in that** the connection mechanism in rotation (M4) about the axis x comprises oblong arched holes (21) having as a centre, the axis x and arranged in a radial shoulder (20) of the detector being applied against said sheet (12) provided with three circular holes facing said oblong arched holes.

3. Device according to any one of claims 1 or 2, **characterised in that** the connection mechanism in translation (M2) about the axis y is with a slider and comprises a tab (27) about the axis y, arranged in one of the sheet (12) or the plate (13) and with which engages a corresponding groove (31) arranged in the other of the plate or the sheet.

4. Device according to any one of claims 1 to 3, **characterised in that** the connection mechanisms in rotation (M6) and in translation (M3) with respect to the axis z are with a slider and comprise portions with engaging cylindrical surfaces (34, 44) provided respectively on the plate and the bracket part.

5. Device according to any one of claims 1 to 4, **characterised in that** the connection mechanisms in translation (M1) about the axis x and in rotation (M5) about the axis y are respectively with a slider, a pin (61) with flats (67) connected to the bracket (14) sliding in an oblong hole (72) of the beam (15) about the axis x, and with cylindrical articulation, an axis (60) forming a pivot about the axis y connecting the bracket (14) to said beam (15) via a circular orifice (70).

6. Device according to any one of claims 1 to 6, **characterised in that** said adjustable connection mechanisms (M1 to M6) of the parts are immobilised in position by clamping members.

7. Device according to claim 6, **characterised in that** means for taking up the slack (130) are provided between said parts (12 to 15) and the connection mechanisms (M1 to M6) thereof.

8. Device according to any one of claims 1 to 7, **characterised in that** one of said planes to be positioned by the intermediary of the nested parts with adjustable connection mechanisms, is mobile with respect to the other, fixed, plane or the two planes are mobile with respect to one another.

9. Optoelectronic system comprising at least:
- one optical device (2) able to observe the environment and having a focal plane (3) for image formation;
- one detector (5) with a detection matrix forming an active plane (7) and arranged facing the focal plane of the optical device; and
- one adjustable mechanical connection device (8) that associates said optical device with said matrix detector to position the active plane (7) of the matrix with respect to the focal plane (3) of the optical device,
**characterised in that** said connection device (8) is of the type as defined according to any one of the preceding claims 1 to 10.

10. Adjustment tool (80) making it possible to adjust the connection mechanisms of the connection device (8) according to any one of claims 1 to 8, according to the three translations and the three rotations of a three-dimensional orthonormal frame of reference, comprising a rigid support (81, 82) on which can be fastened one of the nested end parts (15) bearing in a fixed manner one of said planes, and adjustment means (R1 to R6) configured to act individually on the connection mechanisms (M1 to M6) of said connection device (8) to move said other nested parts (12, 13, 14) according to the translations and the rotations and adjust the position of the other plane associated with the other end piece, with respect to the preceding plane.

11. Tool according to the preceding claim, **characterised in that** said adjustment means (R1 to R6) are defined by screws (89, 91, 93, 95, 98, 100).
